Europäisches Patentamt

European Patent Office

Office européen des brevets

(11) Veröffentlichungsnummer: **0 216 192**
**B1**

(12) **EUROPÄISCHE PATENTSCHRIFT**

(45) Veröffentlichungstag der Patentschrift: **11.04.90**

(21) Anmeldenummer: **86111975.8**

(22) Anmeldetag: **29.08.86**

(51) Int. Cl.⁵: **A 46 D 1/00, A 46 D 9/02**

(54) Verfahren zum Abrunden der Borstenenden von Zahnbürsten.

(30) Priorität: **20.09.85 DE 3533533**

(43) Veröffentlichungstag der Anmeldung:
**01.04.87 Patentblatt 87/14**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**EP-A-0 060 592**
**EP-A-0 122 451**
**DE-B-1 083 781**
**DE-C- 810 867**
**US-A-2 587 792**

(73) Patentinhaber: **Blendax GmbH**
**Rheinallee 88**
**D-6500 Mainz 1 (DE)**

(72) Erfinder: **Amos, Walter, Dr.**
**Willi-Borngässer-Strasse 10**
**D-6200 Wiesbaden (DE)**
Erfinder: **Klein, Horst**
**Schwarzwaldstrasse 6**
**D-6233 Kelkheim-Fischbach (DE)**

Courier Press, Leamington Spa, England.

## Beschreibung

Die vorliegende Erfindung betrifft ein verbessertes Verfahren zum Abrunden von Zahnbürsten-Borstenenden.

Es ist bereits seit langem bekannt, die Borstenenden von Zahnbürsten nach vollendetem Stopfvorgang abzurunden. Diese Abrundung, die erforderlich ist, um Verletzungen des Zahnfleisches durch spitze Borstenenden zu vermeiden, geschieht in der Regel durch mechanisches Abschleifen und/oder Wärmebehandlung der gestopften und auf Länge geschnittenen Bürstenköpfe. Es hat sich jedoch gezeigt, daß diese Behandlungsmethode nicht immer zu befriedigenden Ergebnissen hinsichtlich der Gleichmäßigkeit der Abrundung der Borstenenden im Borstenfeld des Zahnbürstenkopfes fuhrt.

Es wurde deshalb auch schon vorgeschlagen, das Abrunden der Borstenenden durch Einwirkung eines Laserstrahls durchzuführen (EP—A 60 592). Bei dem Versuch, diesen Vorschlag in technischem Maßstab zu realisieren, zeigte sich jedoch, daß dabei, offensichtlich durch Verschmelzungsvorgange, pilzförmige Borstenenden erzielt wurden, deren Durchmesser weit über dem Durchmesser des einzelnen Filamentes lag. Borstenspitzen mit einem derart hohen Durchmesser sind jedoch nicht tolerierbar, da sie das Eindringen der Borsten in die Zahnzwischenräume und damit deren gründliche Reinigung verhindern.

Außerdem hat sich gezeigt, daß bei der undifferenzierten Anwendung von Laserstrahlen zum Abrunden der Enden von Zahnbürstenborsten ein Verschmelzen benachbarter Borsten auftritt, wodurch die Zahnbürste naturgemäß unbrauchbar wird.

Die Erfindung geht nunmehr von der Aufgabenstellung aus, diese Nachteile zu vermeiden.

Die Lösung dieser Aufgabe besteht nun darin, das Abrunden der Borstenenden von Zahnbürsten durch Laserstrahlen in einem elektrischen Feld durchzuführen.

Vorzugsweise wird dabei nach folgendem Schema gearbeitet:

Der Borstenkopf wird mit Elektronen aufgeladen. Dann wird frontal ein Laserstrahl auf den Borstenkopf zur Einwirkung gebracht, wobei sich die Borsten in einem elektrostatischen Feld befinden. Die aufgeladene, angeschmolzene Borste wird von der komplementär geladenen Elektrode (Anode) angezogen und erhält dadurch eine längliche, ellipsoide Form, wobei der Durchmesser der nunmehr abgerundeten Borstenspitze, falls überhaupt, nur geringfügig über demjenigen des Einzelfilamentes liegt.

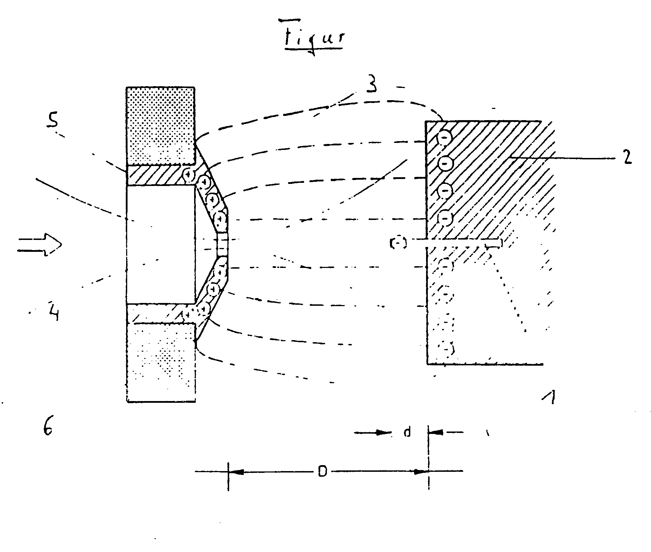

In der Figur wird schematisch der Bearbeitungsvorgang wiedergegeben.

Dabei befindet sich eine Einzelborste (1), beispielsweise aus einer Polyamidfaser bestehend, die durch eine Kupferkathode (2) negativ aufgeladen ist, in einem elektrostatischen Feld (3), wobei, während der frontalen Einwirkung eines fokussierten Laserstrahls (4) mittels einer Kupferanode (5) eine positive Ladung ausgeübt wird, wodurch sich das negativ geladene Ende der Borste (1) während des Schmelzvorgangs zu der Anode (5) hin ausrichtet (6 = Halterung).

Dabei beträgt der bevorzugte Elektrodenabstand D etwa 0,2 bis etwa 3 cm.

Die bevorzugte Feldstärke wurde mit etwa 3 kV/cm bis etwa 12 kV/cm bestimmt; während die bevorzugte Laser-Intensität zwischen etwa 5 $W/cm^2$ bis etwa 150 $W/cm^2$ liegt.

Bei der Laserstrahlenquelle handelt es sich um übliche bekannte Festkörper- oder Gaslaser, vorzugsweise um einen $CO_2$-Laser.

## Patentanspruch

Verfahren zum Abrunden der Borstenenden von Zahnbürsten durch Einwirkung eines Laserstrahls, dadurch gekennzeichnet, daß die Abrundung in einem elektrostatischen Feld erfolgt.

## Revendication

Procédé pour arrondir les extrémités de poils de brosses à dents par l'action d'un rayon laser, caractérisé en ce que l'opération d'arrondissement a lieu dans un champ électrostatique.

## Claim

A method of rounding tips of a toothbrush by laser radiation characterized in that the rounding process is carried in an electrostatic field.

Figur